Europäisches Patentamt

European Patent Office

Office européen des brevets

(11) Publication number: **0 066 563**
**B1**

# EUROPEAN PATENT SPECIFICATION

(45) Date of publication of patent specification: **07.08.85**

(21) Application number: **82850118.9**

(22) Date of filing: **25.05.82**

(51) Int. Cl.⁴: **C 10 J 3/46, C 10 J 3/52, C 21 B 3/04**

(54) **A gasification apparatus.**

(30) Priority: **27.05.81 SE 8103365**

(43) Date of publication of application:
**08.12.82 Bulletin 82/49**

(45) Publication of the grant of the patent:
**07.08.85 Bulletin 85/32**

(84) Designated Contracting States:
**AT BE CH DE FR GB IT LI LU NL SE**

(56) References cited:
**DE-A-2 643 310
DE-A-2 950 749
FR-A-2 369 502
GB-A- 712 929
US-A-2 953 445
US-A-2 971 830**

(73) Proprietor: **Boliden Aktiebolag
Box 5508
S-114 85 Stockholm (SE)**

(72) Inventor: **Hellestam, Carl-Johan Sigvard
Drottninggatan 153
S-252 33 Helsingborg (SE)**
Inventor: **Elvander, Hans Ivar
Halalid 15
S-252 40 Helsingborg (SE)**

(74) Representative: **Lundin, Björn-Eric et al
Boliden Aktiebolag Box 5508
S-114 85 Stockholm (SE)**

Courier Press, Leamington Spa, England.

## Description

The invention relates to an apparatus for producing fuel gas or synthesis gas by partially combusting carbonaceous fuel, preferably solid carbonaceous fuel having a high content of non-combustible constituents, such as in particular ashrich coal, shales and carbon-containing residues obtained when working-up coal. The apparatus comprises a shaft-like reactor arranged for injecting fuel in a finely divided form thereinto and for partially combusting said fuel during movement down through said reactor to form a fuel gas or synthesis gas during melting of the non-combustible constituents of the fuel, and removing the melt formed from the bottom part of the reactor.

Known processes and apparatus for producing fuel gas or synthesis gas, said processes and apparatus including inter alia the Koppers-Totzek-process, the Shell-Koppers-process, the Texaco-process (for example such as disclosed in GB—A—712929), the C-E-process and the Otto-Saarberg-process, are encumbered with serious deficiences and limitations. Thus, it is necessary to use a very finely-divided fuel having a relatively low ash content if acceptable results with respect to gas production are to be obtained with the very short resident time available to the fuel in the reactor chamber, and if the problems relating to dust and slag are to be solved in an acceptable manner.

In FR—A—2369502 (Inex Resources) there is, however, provided a method, in which fuel having ash to a certain degree may be gasified, but the method provides fluxing the slag with alkali compounds to lower the melting point of the slag. Also US—A—2971830 (Sumitomo), which refers to a similar process, provides addition of flux to lower slag melting point. In both these processes the gasification temperature must be held comparatively low due to the risk for slag attack on the reactor ceiling.

Due to the above problems the ash content cannot in practice be more than 10—20 per cent by weight.

Consequently, the object of the present invention is to provide a novel and useful apparatus for gasification processes of the aforementioned kind, by which said deficiencies and limitations are at least substantially eliminated.

To this end there is proposed in accordance with the invention an apparatus of the kind mentioned in the introduction which is further characterized by tuyers located at the upper part of the reactor and optionally further tuyers located below said tuyers, directed obliquely downwardly and tangentially to imaginary horizontal circles having a diameter, which is smaller than the smallest cross-sectional dimensions of the reactor, and arranged for injecting the fuel and oxygen-gas or oxygen-enriched air and for bringing at least a substantial part of the fuel or its non-combustible constituents, during passage of the supplied and formed gas and the fuel suspended therein downwards in a helical path along the wall of the reactor into contact with said wall along substantially the whole height thereof thereby providing a layer of downwardly running melt on said wall; a reactor wall comprising an inner unlined metallic wall, a cooling space and an outer shell; a coating of frozen melt between the inner wall and said layer of downwardly running melt on the coating; a bottom part of the reactor arranged for passing said gases upwardly in the centre portion of the reactor and for collecting and removing the melt from the reactor and a gas-outlet shaft located connected to the upper part of the reactor. In the molten layer caused to run down the wall of the reactor or reactor chamber in accordance with the invention, said molten layer comprising mainly molten slag obtained from the non-combustible constituents of the fuel, there is formed favourable reaction conditions for gasifying coal and carbonaceous combustible substances in the coarser fuel particles which, when coming into contact with the molten layer running down said wall, adhere to said layer and accompany said layer relatively slowly towards the bottom part of the reactor chamber. Because of the different physical properties of the particles in relation to the inorganic slag mass, said different physical properties being primarily a different density and different surface properties, the particles tend to collect on the surface of the slag layer facing the interior of the reactor, where they are exposed to the hot combustion gases.

The partial combustion is effected with oxygen-gas or oxygen-enriched air, whereat high combustion temperatures, which promote the gasification of the fuel, and a rich fuel gas or synthesis gas can be obtained. Suitably, at least part of the gas sustaining said partial combustion is utilized as a carrier gas for injecting the finely divided fuel into the reactor chamber, thereby avoiding in an advantageous manner dilution of the resultant fuel gas or synthesis gas with a foreign carrier gas.

In order to enable the reactor to be utilized effectively along the whole of its height, at least a part of the gas sustaining said partial combustion may suitably be introduced into the reactor at a level located beneath the level at which the fuel is injected into said chamber.

A desired, relatively long gasification reaction time is obtained in accordance with the invention due to the fact that the fuel and the oxygen gas or oxygen-enriched air is injected through nozzles which are directed obliquely downwardly and tangentially to imaginary horizontal circles in the shaft-like reactor chamber having a diameter which is smaller than the smallest cross-sectional dimensions of the reactor chamber. A particularly favourable pattern of gas flow is obtained in the reactor when applying this method of procedure, since both the supplied and the formed gas and the fuel suspended therein are first forced downwards in a helical path along the wall of the reactor, to then turn and pass vertically upwardly in the centre of said chamber. During the rotary and downward movement of the gas suspension along the wall of the reactor, solid and molten particles are caused to move towards the wall of the reactor, whereat large particles will contact the slag layer high up on said wall and smaller particles lower down on the wall, whereat those particles which have already melted and the melt obtained by melting meltable material present in said solid particles form and maintain the molten slag covering the wall of the reactor. As beforementioned, at the bottom of the reactor the gas is forced to turn upwardly in the centre of the reactor chamber, whereat small particles still suspended in the gas stream continue downwardly and can be caught by a slag bath formed in the bottom part of the reactor chamber. In this way, the flow of gas passing upwardly through the centre of the reactor chamber is substantially clean of dust particles. The manner in which the gas flows through the reactor chamber makes possible an intensive exchange of heat between the downwardly passing gas and the upwardly passing gas. This enables a high temperature to be obtained throughout the whole of the reaction volume, which accelerates the gasification reactions and provides for rapid ignition of the reaction mass immediately adjacent the injection or supply nozzles. The practically dust-free gas in the centre of the reactor chamber also provides good heat-penetration conditions. Slag which runs down into the slag bath becomes very hot as a result of heat radiation, and becomes more liquid as a result thereof.

The wall of the reactor chamber is kept cooled, in order to maintain on said wall, between the wall and the molten layer thereon, a congealed or frozen coating formed by the non-combustible constituents of the fuel and protecting the wall against slag attack and overheating. In this respect there is preferably used an unlined metallic reactor wall having a cooling jacket through which a coolant is passed. In this way the reactor is self-lining, thereby advantageously avoiding costs and work involved with lining the reactor.

The layer of slag on the wall of the reactor chamber is heat-insulating and contributes therewith to maintaining the desired high reaction temperature in the reactor. For the purpose of maintaining a slag layer of desired thickness there is preferably used, when carrying out the gasification method according to the invention, a fuel which contains, or which can be caused to contain by means of additives, at least 40 percent by weight non-combustible constituents. Thus, when carrying out the method according to the invention high contents of ash-forming or slag-forming constituents in the fuel, for example to 70—80 percent by weight, are an advantage. This is in direct contrast to the case with the known gasification methods recited in the introduction, in which there must be used relatively pure and expensive fuels, the ash content of which in each particular case should not exceed 40 percent by weight.

When operating the apparatus of the invention, the additives used for maintaining in the raw material charged to the reactor chamber a sufficient quantity of non-combustible constituents for forming and sustaining the slag layer on the wall of the reactor chamber, and for optional optimization of the composition of said constituents, include one or more materials taken from the group: lime, limestone, alkali compounds, iron compounds, suitably in the form of pyrites or pyrrhotites, silicates, quartz and parts of non-combustible constituents previously removed from the reactor chamber.

To the reactor chamber may be charged fuel which contain sulphur, for example organically bound to carbon compounds in the form of inorganically bound sulphide or sulphate. Steam can to advantage be charged to the reactor chamber, suitably as a carrier gas for the fuel, in order to cause said sulphur to pass practically completely into the formed fuel gas in the form of hydrogen sulphide or carbonyl sulphide, these compounds being readily removable from the fuel gas and readily convertible to elementary sulphur.

When the fuel and optional additives charged to the reactor chamber contains iron compounds, the reduction conditions in the lower part of the reactor chamber can, in accordance with the invention, be advantageously so adapted that the iron compounds are reduced to iron, which is collected and discharged from the bottom part of the reactor chamber together with or separate from remaining constituents of said melt.

In this respect the gasification reactor can be employed for gasification processes combined with the manufacture of iron, for example by including in the raw material charged to the reactor chamber slag-forming additives in the form of iron pyrites or other iron-containing material, for example iron-containing shales or other poor, iron-containing materials able to provide the desired amount of slag and the desired slag composition in the reactor chamber. Additional heat for the reduction process and, if desired, for melting purposes may be supplied electrically or electro-inductively to a lower portion of the reactor by means of electrodes or induction coils.

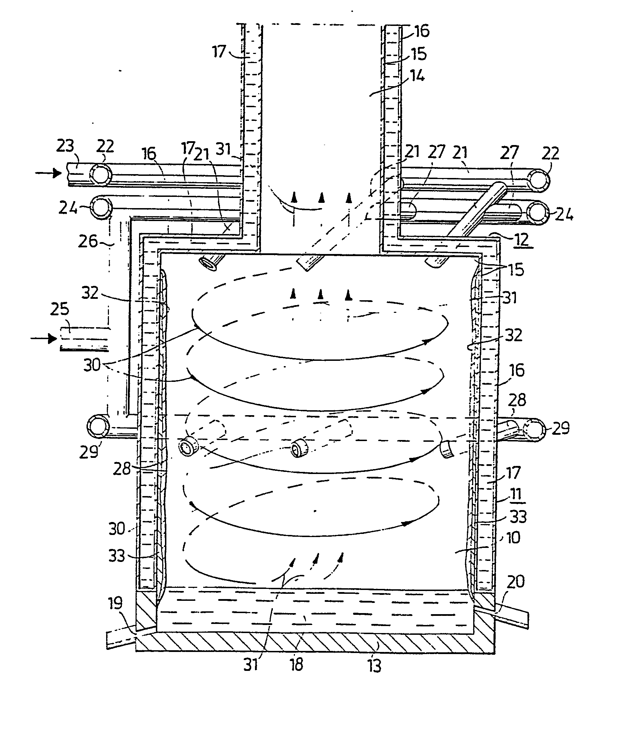

The invention will now be described in more detail with reference to a vertical-sectional view of a reactor illustrated schematically in the accompanying drawing, in which reactor fuel gas or synthesis gas is produced by partially combusting carbonaceous fuel.

The gasifying reactor has a shaft-like reactor chamber 10 in the form of an upright cylinder whose diameter is approximately the same as its height. The reactor chamber 10 is bounded by a peripheral wall 11, an upper part 12 and a bottom part 13. Connected to the upper part 12 is a gas-outlet shaft 14. The wall 11, the upper part 12 and the shaft 14 have metallic walls 15 which face towards the interior of the chamber 10 and the shaft 14 respectively and which are surrounded by an outer shell 16. A suitable coolant, for example water and/or steam, is circulated in a space 17 between the walls 15 and the shell 16 in a manner not specifically described, so as to keep the walls 15 at a relatively low temperature. The reactor walls and shaft walls, comprising walls 15 and the shell 16, and the upper part 12 may suitably be formed of gas-impermeable panels obtained by welding together boiler tubes extending adjacent to one another.

The upper end of the shaft 14 discharges into an apparatus for purifying fuel gas or synthesis gas departing through the gas-outlet shaft 14 and for recovering physical heat from said gas, which gas is generated in a manner hereinafter described. This apparatus may comprise for example, a boiler and one or more cyclones. The bottom part 13 comprises a collecting part for melt 18 formed during the manufacture of said gas, and is provided with one or more outlets, as shown at 19 and 20, for discharging molten material from the reactor chamber 10, either continuously or intermittently.

The reference 21 identifies a plurality of nozzles or tuyers, which extend from a common distribution line 22 extending around the shaft 14, obliquely downwardly through the upper part 12 of the reactor and into the reactor chamber 10, whereat the tuyers 21 are inclined so that they also have a direction component which is tangential to an imaginary horizontal circle in the reactor chamber 10, the diameter of said imaginary circle being smaller than the diameter of said chamber. A supply line 23 discharges into the distribution line 22 and serves to conduct finely divided carbonaceous fuel suspended in a carrier gas, and optionally additives accompanying the fuel, into the line 22, from where the fuel is conveyed through the tuyers 21 and injected into the reactor chamber 10. The reference 24 identifies a further distribution line which extends around the shaft 14 and which supplies oxygen-containing gas via lines 25 and 26 and delivers said gas to the tuyers 21 through lines 27. The reactor is also provided to advantage with a ring of nozzles or tuyers 28, each of which extends from a distribution line 29 passing around the reactor, through the wall 11 of the reactor chamber 10 and into said chamber. In the illustrated embodiment, the line 29 is connected to the line 25 via the line 26, so that oxygen-containing gas is supplied to the reactor chamber through tuyers 28. As with the tuyers 21, the tuyers 28 extend obliquely downwardly and tangentially to an imaginary horizontal circle whose diameter is smaller than the diameter of the reactor chamber 10, so that material and gas injected through the tuyers 21, 28 is caused to move obliquely downwardly in a helical movement path, as shown by the arrows 30, the path taken by said gas and said material turning at the surface of the melt 18 located in the bottom part 13 of the reactor chamber 10, and from there passing upwardly centrally through the reactor chamber 10 and the shaft 14, as shown by the arrows 31.

When manufacturing fuel gas or synthesis gas while using the illustrated reactor there is injected into the reactor chamber 10 through the tuyers 21 a raw material in the form of a finely divided carbonaceous fuel having a high content of non-combustible constituents, together with oxygen-enriched air or commercial oxygen gas, and preferably also steam in a quantity sufficient to convert any sulphur compounds present in the raw material to hydrogen sulphide or carbonyl sulphide. At the same time, oxygen-containing gas is injected through the tuyers 28. As a result of the described design of the reactor chamber 10 and the positioning of the tuyers 21, 28 there is obtained the flow pattern indicated by the arrows 30, 31. The fuel-gas suspension is ignited, and the ratio between the fuel and the oxygen-contaíning gas sustaining the combustion process is adapted so that there is obtained in front of each of the outlet orifices of respective tuyers 21 a hot flame having a temperature of about 2000°C. In this way, the inorganic constituents of the fuel are rapidly caused to melt, whereat particles of coal and ash are thrown by centrifugal force towards the wall 15 of the reactor chamber, said wall having a lower temperature as a result of the aforementioned cooling. Molten particles close to the wall congeal or freeze into a hard mass, forming a coating 33 of frozen slag which lines the wall 15 of the reactor chamber 10. At locations more remote from the wall 15 of the reactor, said mass converts into a semi-molten or doughy state and forms on the side facing the interior of the reactor space 10 a downwardly running layer 32 of molten slag, which is collected in the form of a slag bath 18 at the bottom part 13 of the reactor. The layer 32 is sustained by newly arriving molten ash particles.

The high temperature causes volatile constituents in the fuel, e.g. alkali compounds, to be rapidly gasified and imparts a high reaction ability to silica or acid silicates. In the case of reactors having brick linings this would result in much wear on the bricks, since it is impossible to find a high-refractory brick which is capable of resisting both condensing alkali compounds and aggressive acid silicates. The metallic reactor inner wall 15, on which the formed slag freezes, is free from all attack, however.

The slag layers 32, 33 on the reactor wall 15 form a heat insulator therefor and, in this way, contribute to maintaining a desired high reaction temperature in the reactor chamber 10 and result in relatively low vapour production in the space 17. For the purpose of achieving a sufficiently good heat-insulating effect, the formed slag should not be excessively liquid. For example, a slag which runs too freely down the reactor wall 15 will impair the heat economy of the reactor.

Favourable reaction conditions for gasifying coarse coal particles are formed in the running slag layer 32. Because of the different physical properties thereof in relation to the inorganic slag mass the coal particles have a tendency to collect on the inner surface of the liquid slag layer 32. In this way said particles are influenced by the constituents of the slag, primarily iron oxides present therein. The very high reaction temperature of the flame issuing from the tuyers 21 splits the pyrites present into FeS, which together with other iron compounds are converted to wüstite. The wüstite reacts in the liquid slag layer 32 with carbon to form iron and carbon monoxide while cooling.

When oxygen-containing gas is blown through the tuyers 28 the iron again reacts to form iron oxide, which is able to gasify further carbon. Thus, iron present in the slag promotes the reactions taking place when gasifying coal.

Large solid fuel particles are thrown against the slag layer 32 higher up in the reactor space 10, while smaller particles accompany the downwardly flowing gas stream and adhere to the slag layer 32 further down. Thus, the coarser coal particles in the downwardly flowing slag layer have more time to be gasified. This means that a very low carbon content can be obtained in the slag bath 18. Thus, there can also be used fuel which is not so finely ground as that required in other so-called flash reactors.

A thick slag layer on the wall of the reactor chamber has a significant energy content in the form of physical heat. This heat actively contributes to ensuring that heat-requiring reactions in the slag layer 32, above all the reaction between wüstite and carbon, take place quickly enough.

The slag particles are quickly cooled from the very high flame temperature down by some hundred degrees centigrade in the slag layer. In this way the amount of alkali which leaves the reactor together with the gas is reduced. Consequently, the alkali will be present in the slag to a larger extent than otherwise usual in flash reactors. In this way troublesome coatings of alkali in the exhaust gas system are avoided, thereby decreasing the risk of blockages. When the non-combustible constituents of the fuel form highly viscous slag, e.g. a slag having a high aluminium-oxide content requiring the addition of a fluxing agent, the amount of fluxing agent required is less than would otherwise be the case, since more alkali remains in the slag and improves its flowability.

At the bottom of the reactor chamber 10 the small particles accompanying the gas continue to move downwardly and are caught by the slag bath 18, where the remainder of the gas turns and passes upwardly in the manner indicated by the arrows 31. The gas flow passing upwardly in the centre of the reactor chamber 10 becomes, in this way, relatively free from dust particles. The manner in which the gas flows also enables intensive heat exchange between the downwardly flowing gas and the upwardly flowing gas. This enables a high temperature to be reached throughout the whole of the reaction volume, which accelerates the gasification reactions and provides rapid ignition of the reaction mass immediately adjacent the injection tuyers 21. The practically dust-free gas in the centre of the reactor chamber provides good heat-penetration conditions. The slag, which is cooled some-what as it flows down the wall 15 of the reactor chamber and runs down into the slag bath 18, is again heated to high temperatures by heat-radiation and made more liquid. Surplus slag is tapped from the bottom part 13 through one of the outlets 19 and 20, and is passed, for example, to a cooling and granulating plant. By selecting suitable reduction conditions, the iron compounds accompanying the fuel can be reduced to iron in the lower part of the slag layer 32, whereat said iron is collected beneath the slag bath 18 and may be tapped off separately through the outlet 19. The fuel gas or synthesis gas formed by incomplete combustion of carbonaceous fuel in the reactor chamber 10 is, as beforementioned, very pure and is discharged through the shaft 14 to a collecting or consuming station, subsequent to recovering heat and separating dust from said gas.

The oxidation potential in the gas mass in the reactor chamber 10 is regulated by the secondary oxygen charged through the tuyers 28. In this way a higher oxidation potential can be maintained adjacent the reactor chamber wall 11 thereby facilitating and accelerating the oxidation of coal particles and iron accompanying the slag layer 32 with favourable carbon transformation conditions as a result thereof.

As will be understood from the aforegoing, a slag layer 32 of suitable thickness is of great significance. In known powder reactors (flash gasifiers) a fuel having a low ash content is desired. To enable the advantages afforded by the described reactor to be utilized to the full the ash content of the fuel, however, should be high, preferably above 40%. If the fuel in its natural state does not have suitable properties, a slag former should be added, e.g. by admixing lime, limestone, alkali compounds or silicates and quartz. If the ash has a suitable composition but the ash content of the fuel is too low to obtain a satisfactory coating of slag on the wall 15 of the reactor chamber, discharged slag can be recycled. Because optimal functioning of the reactor requires a relatively large quantity of slag, it has been found particularly suitable for gasifying coal or coal residues having a very high ash content and shales. In this latter case, shales having an ash content of 70—80 percent have been found particularly suitable for gasification. The shale ash also contains about 5% iron and approximately an equal amount of alkali metals. It will be understood from the aforegoing, that this is an advantage in respect of the gasifying process, since it is possible during said process to utilize the reaction-promoting effect of the iron and alkali metals in this context to the maximum.

In the case of certain fuels having a low iron content, it is suitable to add iron. Since sulphur is normally present and it is necessary to recover hydrogen sulphide and carbonyl sulphide prior to using the fuel gas, the iron can advantageously be added in the form of pyrites or pyrrhotites, preferably of such quality as that obtained when purifying coal.

Since the presence of iron oxide in the liquid slag layer 32 on the wall 15 of the reactor chamber is advantageous from the aspect of gasifying the coal particles, it follows herefrom that it may be suitable to combine the manufacture of liquid raw iron and fuel gas in the reactor chamber 10. Thus, the apparatus according to the invention is well suited for the manufacture of both crude iron and fuel gas having a high carbon monoxide content, from natural materials or mixtures of materials having a high content of iron oxide and/or iron sulphide and slag-rich coals.

Sulphur present in the raw materials, either organically bound with carbon compounds or present as inorganically bound sulphide or sulphate, can be caused to pass practically completely into the fuel gas in the form of hydrogen sulphide or carbonyl sulphide. These compounds can readily be recovered from the fuel gas and can be readily converted to elementary sulphur. Thus, the apparatus according to the invention enables sulphur in iron raw-materials and carbon raw-materials, which as a rule must be considered a troublesome compound, to be readily converted to a valuable retailable product.

In order to obtain suitable fluidity properties of the slag it may be advantageous to mix the fuels. Thus, certain coal ashes are very rich in either alkali or lime. Such coals can be advantageously mixed with coals having acid ashes or with acid shales.

Example

A gasification reactor according to the invention as illustrated in the drawing and able to gasify each year 900 kilotons of alun shale having a kerogen content of 22 percent by weight requires, for an operating time of 7900 hours per year and a gasifying temperature of 1550°C, a reaction-chamber diameter of 4.5 m and a reaction-chamber height of about 5 m. The amount of oxygen gas consumed is 26500 m³ (N)/h, of which 5000 m³ (N)/h can be added at a location beneath the level at which the fuel is charged. The flux used may be burned lime in a quantity of 14 ton/h. In this way there is obtained the following production and process yields.

Production
Crude gas       63100 m³ (N)/h

| Analysis: | | |
|---|---|---|
| $CO_2$ | 16.9 | percent by weight |
| CO | 40.6 | percent by weight |
| $H_2$ | 12.4 | percent by weight |
| $H_2S$ | 7.3 | percent by weight |
| $H_2O$ | 21.3 | percent by weight |
| $N_2$ | 1.5 | percent by weight |
| | 100.0 | percent by weight |

Slag       94 tons per hr

Process yield
Chemical heat content of the gas    55.%

Energy content of high
pressure steam produced in
reactor and steam generator    18.3%

Physical heat in slag (about
70% recoverable)    19.9%

Chemical heat in slag,
metallic iron    2.8%

Heat losses    3.3%

     100.0%

**Claim**

An apparatus for producing fuel gas or synthesis gas by partially combusting carbonaceous fuel, preferably solid carbonaceous fuel having a high content of non-combustible constituents, such as in particular coal, shales and carbon-containing residues from coal dressing processes in the form of a shaft-like reactor (10) arranged for partially combusting said fuel during movement down through said reactor to form said fuel gas or synthesis gas during melting of the non-combustible constituents of the fuel, and for removing the melt (18) formed from the bottom part (13) of the reactor, characterized by tuyers (21) located at the upper part (12) of the reactor and optionally further tuyers (28) located below said tuyers (21) directed obliquely downwardly and tangentially to imaginary horizontal circles having a diameter, which is smaller than the smallest cross-sectional dimensions of the reactor, and arranged for injecting the fuel and oxygen-gas or oxygen-enriched air and for bringing at least a substantial part of the fuel or its non-combustible constituents, during passage of the supplied and formed gas and the fuel suspended therein downwards in a helical path (30) along the inner metallic wall (15) of the reactor into contact with said wall along substantially the whole height thereof thereby providing a layer (32) of downwardly running melt on said inner metallic wall (15) and a coating (33) of frozen melt between the inner metallic wall (15) and said layer (32) of downwardly running melt on the coating (33); a cooling space (17) outside said inner metallic wall (15) and an outer shell (16) enclosing said cooling space (17); a bottom part (13) of the reactor arranged for passing said gases upwardly (31) in the centre portion of the reactor and for collecting and removing the melt (18) from the reactor and a gas-outlet shaft (14) located connected to the upper part (12) of the reactor.

**Patentanspruch**

Vorrichtung zur Erzeugung von Brennstoffgas oder Synthesegas durch Teilverbrennung von kohlenstoffhaltigem Brennstoff, vorzugsweise von festem kohlenstoffhaltigem Brennstoff mit einem hohen Gehalt an nicht brennbaren Bestandteilen, wie besonders Kohle, Schiefern und kohlenstoffhaltigen Rückständen von Kohleaufarbeitungsverfahren, in der Form eines schachtartigen Reaktors (10), der für Teilverbrennung des Brennstuffes während einer Abwärtsbewegung durch diesen Reaktor unter Bildung des Brennstoffgases oder Synthesegases, während die nicht brennbaren Bestandteile des Brennstoffes schmelzen, und für Entfernung der gebildeten Schmelze (18) vom Bodenteil (13) des Reaktors eingerichtet ist, gekennzeichnet durch am oberen Teil (12) des Reaktors angeordnete Düsen (21) und gegebenenfalls unter diesen Düsen (21) angeordnete weitere Düsen (28), die schräg nach unten und tangential zu imaginären horizontalen Kreisen mit einem Durchmesser, der kleiner als die kleinsten Querschnittsabmessungen in dem Reaktor ist, ausgerichtet sind und so angeordnet sind, daß sie den Brennstoff oder Sauerstoffgas oder mit Sauerstoff angereicherte Luft einspritzen und wenigstens einen wesentlichen Teil des Brennstoffes oder seiner nicht brennbaren Bestandteile während des Durchgangs des zugeführten und gebildeten Gases und des darin suspendierten Brennstoffes abwärts auf einem Spiralweg (30) entlang der inneren Metallwand (15) des Reaktors in Berührung mit dieser Wand entlang im wesentlichen ihrer gesamten Höhe bringen und dabei eine Schicht (32) von auf der inneren Metallwand (15) abwärts laufender Schmelze und einen Überzug (33) von erstarrter Schmelze zwischen der inneren Metallwand (15) und dieser Schicht (32) von auf dem Überzug (33) abwärts laufender Schmelze ergeben; einen Kühlraum (17) außerhalb der inneren Metallwand (15) und ein äußeres Gehäuse (16), das diesen Kühlraum (17) einschließt; ein Bodenteil (13) des Reaktors, das so ausgebildet ist, daß die Gase in dem Mittelteil des Reaktors aufwärts (31) strömen und daß die Schmelze (18) aufgefangen und aus dem Reaktor entfernt wird, und einen Gasauslaßschacht (14), der mit dem oberen Teil (12) des Reaktor verbunden ist.

**Revendication**

Appareil pour la production d'un gaz combustible ou d'un gaz de synthèse par combustion partielle d'un combustible carboné, de préférence un combustible carboné solide ayane une teneur élevée en constituants non combustibles, en particulier le charbon, les shistes et les résidus contenant du carbone provenant de procédés de préparation mécanique de charbons, appareil se présentant sous la forme d'un réacteur (10) à cheminée, agencé pour la combustion partielle du combustible susdit durant le déplacement descendant de celui-ci à travers le réacteur en vue de former le gaz combustible ou le gaz de synthèse durant la fusion des constituants non combustibles de ce combustible, et pour séparer la masse fondue (18) formée à partir de la partie inférieure (13) du réacteur, caractérisé par: des tuyères (21) localisées à la partie supérieure (12) du réacteur, et des tuyères supplémentaires éventuelles (28) localisées en dessous de ces tuyères (21), ces tuyères étant dirigées obliquement vers le bas et tangentiellement à des cercles horizontaux imaginaires ayant un diamètre qui est plus petit que les plus petites dimensions transversales du réacteur, et étant agencées pour injecter le combustible et un gaz oxygéné ou de l'air enrichi en oxygène et pour amener au moins une partie importante du combustible ou de ses constituants non combustibles, durant le passage descendant du gaz alimenté formé et du combustible qui y est en suspension suivant un parcours hélicoïdal (30) le long de la paroi métallique interne (15) du réacteur, en contact avec cette paroi le long de pratiquement la totalité de la hauteur de celle-ci, en formant de la sorte une couche (32) de masse fondue se déplaçant vers le bas sur cette paroi métallique interne (15) et un revêtement (33) de masse fondue figée entre la paroi métallique interne (15) et cette couche (32) de masse fondue descendant sur ce revêtement (33); un espace de refroidissement (17) extérieur à la paroi métallique interne (15) et une enveloppe externe (16) enveloppant cet espace de refroidissement (17); une partie inférieure (13) du réacteur, agencée pour orienter les gaz vers la haut (31) dans la partie centrale du réacteur et pour récolter et enlever la masse fondue (18) hors de ce réacteur; et une cheminée de sortie de gaz (14) localisée pour se connecter à la partie supérieure (12) du réacteur.